# FASCICULE DE BREVET EUROPEEN

(11) **EP 2 732 318 B1**
(45) Date de publication et mention de la délivrance du brevet: **19.11.2014**
(21) Numéro de dépôt: 12719359.7
(22) Date de dépôt: 02.05.2012
(51) Int. Cl.: G02B 6/00, G02F 1/1339

(54) **GUIDE DE LUMIÈRE POUR L'ÉCLAIRAGE D'UN DISPOSITIF D'AFFICHAGE D'INFORMATIONS**
LICHTLEITER ZUR BELEUCHTUNG EINER ANZEIGEVORRICHTUNG
LIGHT GUIDE FOR ILLUMINATING A DISPLAY DEVICE

(30) Priorité: 15.07.2011 EP 11005805
(43) Date de publication de la demande: 21.05.2014
(73) Titulaire: ETA SA Manufacture Horlogère Suisse, 2540 Grenchen (CH)
(72) Inventeur: KALTENRIEDER, André, CH-2515 Prêles (CH); JUFER, Martin, CH-4917 Melchnau (CH)
(74) Mandataire: Supper, Marc
(86) Numéro de dépôt international: PCT/EP2012/058007
(87) Numéro de publication internationale: WO 2013/010689

(56) Documents cités:
- EP-A1- 1 566 686
- GB-A- 2 008 812

## Description

La présente invention concerne un guide de lumière pour l'éclairage d'un dispositif d'affichage d'informations. Plus précisément, la présente invention concerne un guide de lumière pour l'éclairage par l'arrière ou rétro-éclairage d'un dispositif d'affichage à cristal liquide.

Une technique connue pour assurer l'éclairage par l'arrière d'un dispositif d'affichage de type transmissif consiste à disposer en-dessous du dispositif d'affichage un guide de lumière transparent à l'intérieur duquel est injectée de la lumière, par exemple EP 1 566 686. Le guide de lumière est structuré de manière à permettre progressivement l'extraction de la lumière qui s'y propage en direction du dispositif d'affichage. Les structures prévues dans le guide de lumière pour permettre l'extraction de la lumière sont appelées «extracteurs de lumière». Le nombre, la géométrie et la distribution de ces extracteurs à l'intérieur du guide de lumière varient en fonction des applications.

La sélection d'un type donné d'extracteur de lumière qui soit apte à fournir un bon niveau d'illumination sans toutefois dégrader le contraste d'affichage des informations fournies par le dispositif d'affichage est une tâche ardue. En effet, pour des raisons notamment esthétiques que l'on comprendra aisément, de tels extracteurs de lumière doivent en particulier être aussi peu visibles que possible au regard de l'utilisateur et pouvoir assurer un éclairage du dispositif d'affichage qui soit aussi uniforme que possible sur toute la surface du dispositif d'affichage. Cette dernière condition est tout particulièrement importante dans le cas de l'éclairage d'un dispositif d'affichage intégré dans une montre-bracelet.

Un guide de lumière du genre brièvement décrit ci-dessus comporte au moins une zone dans laquelle est injectée la lumière produite par une source lumineuse. Les sources de lumière utilisées dans ce type d'application sont le plus souvent des sources de lumière ponctuelles telles que des diodes électroluminescentes également connues sous leur acronyme anglo-saxon "LED". De telles sources de lumière présentent une puissance optique à l'injection dans le guide de lumière élevée. Il apparaît ainsi autour de ces sources lumineuses des halos de lumière qui sont perceptibles à travers le dispositif d'affichage d'informations et qui nuisent à l'aspect esthétique de l'objet tel une montre bracelet dans lequel le dispositif d'affichage est intégré.

Pour remédier à ce problème, une solution envisageable consiste à recouvrir la ou les zones du guide de lumière dans lesquelles la lumière est injectée d'une couche d'un matériau absorbant la lumière. De la sorte, les halos de lumière sont masqués et deviennent invisibles au regard de l'utilisateur.

La demanderesse s'est livrée à de tels essais mais s'est néanmoins heurtée à une autre difficulté. En effet, dans la construction envisagée par la demanderesse, le guide de lumière sert non seulement à éclairer un dispositif d'affichage d'informations, mais est également utilisé comme élément de guidage pour un connecteur électrique permettant la connexion électrique entre les électrodes d'affichage du dispositif d'affichage d'informations et les composants électroniques de commande du dispositif d'affichage. Or, il s'est avéré que, dans le cas d'un tel agencement, l'utilisation d'un matériau absorbant conducteur de l'électricité était rédhibitoire. En effet, en venant en contact avec le connecteur électrique, le matériau absorbant conducteur de l'électricité crée des courts-circuits.

Comme il est pratiquement impossible ou, tout du moins, économiquement non réaliste de déposer la couche de matériau absorbant avec une précision telle qu'elle ne vienne pas en contact avec le connecteur électrique, il a fallu sélectionner une autre catégorie de matériau absorbant.

La présente invention a pour but de répondre à ce besoin ainsi qu'à d'autres encore en procurant un guide de lumière servant à la fois de système d'éclairage pour un dispositif d'affichage et d'élément de guidage pour un connecteur électrique dans lequel les halos générés par les sources lumineuses qui injectent de la lumière dans le guide sont masqués au regard de l'utilisateur.

A cet effet, la présente invention concerne un système d'éclairage d'un dispositif d'affichage d'informations, ce système d'éclairage comprenant un guide de lumière comportant au moins une zone dans laquelle est injectée la lumière produite par une source lumineuse, ce guide de lumière étant également utilisé comme élément de guidage pour au moins un connecteur électrique permettant la connexion électrique entre le dispositif d'affichage d'informations et un circuit électronique de commande du dispositif d'affichage d'informations, ce système d'éclairage étant caractérisé en ce qu'au voisinage de la zone d'injection de la lumière, le guide de lumière est revêtu d'une couche de matériau non conducteur de l'électricité absorbant la lumière, le guide de lumière comprenant une fente rectiligne dans laquelle est guidé le connecteur électrique, une surface intérieure de la fente rectiligne étant enduite de la couche de matériau non conducteur absorbant la lumière.

Grâce à ces caractéristiques, l'invention revendiquée procure un système d'éclairage dans lequel le guide de lumière est enduit, dans les zones d'injection de la lumière, d'une couche d'un matériau non conducteur de l'électricité absorbant la lumière. Les halos de lumière produits par les sources lumineuses sont ainsi efficacement masqués au regard de l'utilisateur et, du fait que le matériau absorbant la lumière est non conducteur, son application peut se faire sans précision exagérée car les craintes de court-circuit électrique avec les connecteurs électriques sont évités. En particulier, du fait que le matériaux absorbant la lumière est non conducteur de l'électricité, cela permet d'utiliser des conducteurs électriques non isolés sur leurs faces latérales ce qui est avantageux du point du vue économique.

D'autres caractéristiques et avantages de la présente invention ressortiront plus clairement de la description détaillée qui suit d'un mode de réalisation du système d'éclairage selon l'invention, cet exemple étant donné à titre purement illustratif et non limitatif seulement en liaison avec le dessin annexé sur lequel:
- la figure 1 est une vue en perspective du guide de lumière selon l'invention;
- la figure 2 est une vue de dessus du guide de lumière de la figure 1 ;
- la figure 3 est une vue de dessous du guide de lumière de la figure 1 ;
- la figure 4 est une vue en coupe selon une direction parallèle à l'axe 12h-6h du guide de lumière selon l'invention dans la région où est logée l'une des sources lumineuses qui injecte la lumière dans le guide de lumière, et
- la figure 5 est une vue en coupe selon la direction 12h-6h du guide de lumière selon l'invention dans la région où le guide de lumière sert également d'élément de guidage à un connecteur électrique permettant la connexion électrique entre un dispositif d'affichage d'informations et un circuit électronique de commande du dispositif d'affichage d'informations.

La présente invention procède de l'idée générale inventive qui consiste à recouvrir les zones d'un guide de lumière dans lesquelles des sources lumineuses injectent de la lumière d'une couche d'un matériau absorbant la lumière afin de masquer au regard de l'utilisateur les halos lumineux produits par les sources lumineuses. Le matériau absorbant la lumière présente en outre la particularité d'être non conducteur de l'électricité. Ce matériau peut donc être appliqué sans précaution excessive même dans le cas où le guide de lumière est utilisé à la fois pour éclairer un dispositif d'affichage d'informations et comme élément de guidage d'au moins un connecteur électrique permettant la connexion électrique entre le dispositif d'affichage d'informations et un circuit électronique de commande du dispositif d'affichage d'informations.

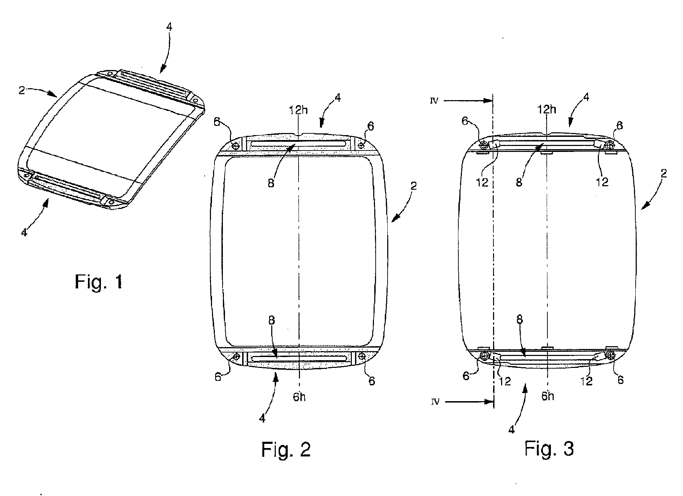

Désigné dans son ensemble par la référence numérique générale 1, le système d'éclairage selon l'invention comprend essentiellement un guide de lumière 2 représenté en perspective à la figure 1. Comme on peut le constater à l'examen de cette figure 1, le guide de lumière 2 est de forme sensiblement parallélépipédique et présente des petits côtés 4 disposés à midi et à six heures et recouverts d'une couche de matériau non conducteur de l'électricité absorbant la lumière.

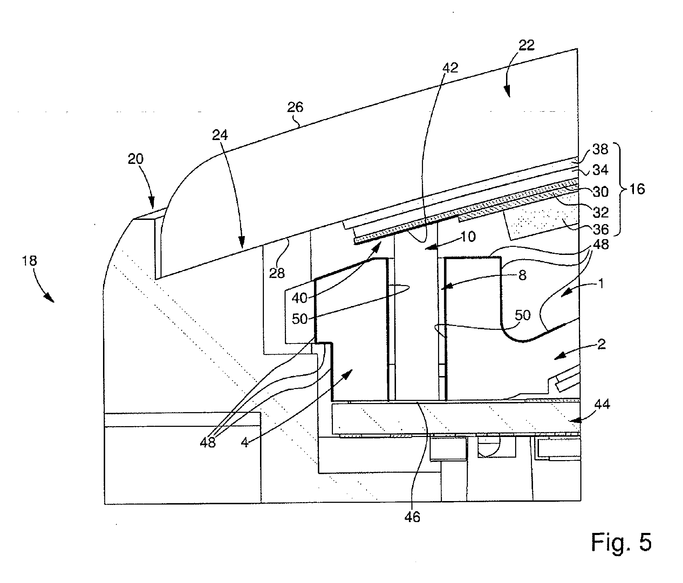

Comme on le voit mieux sur la figure 2 qui est une vue de dessus du guide de lumière 2, quatre trous 6 sont prévus aux quatre coins du guide de lumière 2. Ces quatre trous 6 sont destinés à recevoir quatre tenons (non visibles au dessin) qui viennent de matière avec le fond de la boîte de montre équipée du guide de lumière 2 selon l'invention. Pour l'immobilisation du guide de lumière 2, les quatre tenons sont soudés thermiquement. Le guide de lumière 2 présente, au niveau de ses petits côtés 4, deux fentes rectilignes 8 pour le guidage vertical de deux connecteurs électriques 10 comme cela sera décrit en détail ultérieurement en liaison avec la figure 5. Les zones du guide de lumière 2 dans lesquelles sont prévus les trous 6 et les fentes rectilignes 8 sont, conformément à l'invention, revêtues d'une couche d'un matériau non conducteur de l'électricité ayant pour fonction d'absorber la lumière afin de masquer au regard de l'utilisateur les halos de lumière produits par les sources lumineuses qui injectent de la lumière dans le guide 2. Pour faire ressortir visuellement cette caractéristique, ces zones apparaissent en grisé à la figure 2.

La figure 3 qui est une vue de dessous du guide de lumière 2 montre quatre logements 12 de forme sensiblement rectangulaire disposés de manière symétrique par rapport à l'axe 12h-6h. Ces quatre logements 12 prévus au voisinage des extrémités des fentes rectilignes 8 sont destinés à recevoir chacun une source lumineuse ponctuelle 14, préférentiellement une diode électroluminescente mieux connue sous sa dénomination anglo-saxonne "Light Emitting Diode" ou LED. Ces sources lumineuses 14 permettent d'injecter dans le guide de lumière 2 un flux lumineux qui va être extrait de manière uniforme du guide de lumière 2 par une pluralité d'extracteurs optiques (non représentés). Ces extracteurs optiques ont pour fonction d'extraire le flux lumineux du guide de lumière 2 et de le diriger en direction d'un dispositif d'affichage d'informations 16 destiné à être éclairé. Comme on le verra ci-dessous, dans le cas de la présente invention, le dispositif d'affichage d'informations 16 est disposé au-dessus du guide de lumière 2, c'est-à-dire du côté de l'utilisateur. On a alors l'habitude de dire que le dispositif d'affichage d'informations 16 est rétro-éclairé. Néanmoins, la présente invention est également applicable au cas où le dispositif d'affichage d'informations 16 est disposé sous le guide de lumière 2, c'est-à-dire du côté opposé à l'utilisateur. On notera par ailleurs que, bien que la présente invention soit décrite en liaison avec un exemple dans lequel on utilise quatre sources de lumière ponctuelles 14, il va de soi que cet exemple est donné à titre purement illustratif seulement et que le nombre de sources lumineuses ponctuelles peut varier et être compris entre au moins une source et un nombre déterminé par la géométrie du guide de lumière.

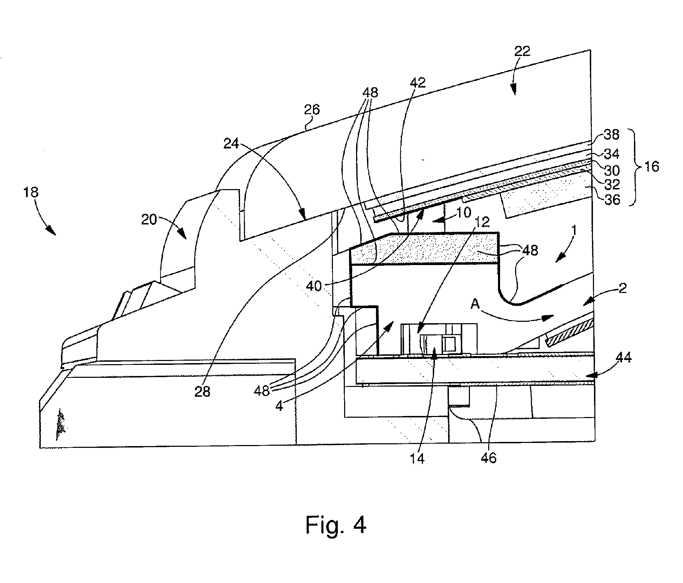

La figure 4 est une vue en coupe selon la direction IV-IV de la figure 3 du guide de lumière 2 selon l'invention dans la région où est logée l'une des sources lumineuses 14 qui injecte la lumière dans le guide de lumière 2.

Plus précisément, la figure 4 illustre le cas où le guide de lumière 2 est intégré dans une boîte de montre 18. Comme il ressort du dessin, la boîte de montre 18 est délimitée par une carrure 20 et une glace de montre 22. La glace de montre 22 est en appui sur une portée 24 de la carrure 20.

La glace de montre 22 comprend deux faces, à savoir une face supérieure 26 dirigée du côté de l'utilisateur de la montre et une face inférieure 28 dirigée du côté de la boîte de montre 18. Un dispositif d'affichage d'informations est fixé sur la face inférieure 28 de la glace de montre 22. A titre d'exemple non limitatif seulement, ce dispositif d'affichage numérique peut être une cellule d'affichage à cristal liquide 16 comprenant un substrat avant 30 et un substrat arrière 32 s'étendant parallèlement et à distance l'un de l'autre et réunis entre eux par un cadre de scellement (non visible au dessin) qui délimite un volume étanche pour le confinement du cristal liquide. Les deux substrats avant 30 et arrière 32 sont disposés entre un premier et un second polariseurs, respectivement 34 et 36, dont les directions de polarisation sont croisées. L'ensemble formé par les deux substrats 30 et 32 et les deux polariseurs 34 et 36 est collé au moyen d'une couche de colle optique 38 sur la face inférieure 28 de la glace de montre 22.

On voit à l'examen de la figure 4 que les dimensions du substrat avant 30 excèdent celles du substrat arrière 32. Ceci permet de ménager une surface de contact 40 sur laquelle débouchent des pistes conductrices 42 pour la connexion électrique des électrodes de commande de la cellule d'affichage 16 avec les composants électroniques (non représentés) de commande de la cellule 16. Ces composants électroniques de commande sont montés sur une carte de circuit imprimé 44 disposée dans la boîte de montre 18, sous la cellule d'affichage 16 et à distance de celle-ci. Conformément à l'invention, les pistes conductrices 42 pour la connexion électrique des électrodes de commande de la cellule d'affichage à cristal liquide 16 sont reliées à des pistes conductrices correspondantes 46 structurées à la surface de la carte de circuit imprimé 44 au moyen d'un connecteur électrique 10 qui s'étend sensiblement verticalement (voir plus particulièrement la figure 5). A titre d'exemple, le connecteur électrique 10 est un connecteur élastomère. On rappelle qu'un connecteur élastomère, également connu sous sa dénomination commerciale de connecteur zébra, est un connecteur souple formé d'une pluralité de feuilles conductrices séparées les unes des autres par des feuilles isolantes en élastomère.

Le montage est complété par le guide de lumière 2 qui prend appui sur la carte de circuit imprimé 44 et qui sert à l'éclairage par l'arrière ou rétro-éclairage de la cellule d'affichage à cristal liquide 16. A cet effet, une diode électroluminescente 14 montée sur la carte de circuit imprimé 44 est disposée dans l'un des logements 12 prévu dans le petit côté 4 du guide de lumière 2.

Pour empêcher les phénomènes de halo à l'endroit où est implantée la diode électroluminescente 14, toute la surface extérieure 48 du petit côté 4 du guide de lumière 2 est recouverte d'une couche de matériau absorbant la lumière. La présence de cette couche de matériau absorbant est illustrée sur la figure 4 au moyen d'un trait noir d'épaisseur renforcée. On comprend donc que toute la portion du guide de lumière 2 située au-dessus de la diode électroluminescente 14 est opaque et permet ainsi de masquer au regard de l'utilisateur le halo de lumière produit par la diode électroluminescente 14. La lumière diffuse par conséquent latéralement dans le guide de lumière 2 suivant la flèche A de la figure 4.

La figure 5 est une vue en coupe selon la direction 12h-6h du guide de lumière 2 selon l'invention dans la région où le guide de lumière 2 sert également d'élément de guidage au connecteur électrique 10 permettant la connexion électrique entre le dispositif d'affichage d'informations 16 et la carte de circuit imprimé 44 sur laquelle sont montés les composants électroniques de commande du dispositif d'affichage d'informations 16. Comme on le voit à l'examen de la figure 5, le connecteur électrique 10 est guidé verticalement dans la fente rectiligne 8 prévue dans le petit côté 4 du guide de lumière 2. Selon un avantage décisif de l'invention, la surface intérieure 50 de la fente rectiligne 8 est enduite de la couche de matériau absorbant pour empêcher les fuites de lumière. Comme la couche de matériau absorbant est non-conductrice de l'électricité, tout risque de court-circuit électrique avec le connecteur électrique 10 est exclu.

A titre d'exemple, le matériau absorbant non conducteur de l'électricité peut être obtenu par mélange d'une base de couleur noire ABS black QS110315-1 et d'un diluant ABS thinner QS01 commercialisés par la société Kunshan Quansheng Paint Co. Ltd.

Il va de soi que la présente invention n'est pas limitée aux modes de réalisation qui viennent d'être décrits et que diverses modifications et variantes simples peuvent être envisagées par l'homme du métier sans sortir du cadre des revendications annexées à la présente demande de brevet.

## Revendications

1. Système d'éclairage d'un dispositif d'affichage d'informations (16), ce système d'éclairage (1) comprenant un guide de lumière (2) comportant au moins une zone (4) dans laquelle est injectée la lumière produite par une source lumineuse (14), ce guide de lumière (2) étant également utilisé comme élément de guidage (8) pour au moins un connecteur électrique (10) permettant la connexion électrique entre le dispositif d'affichage d'informations (16) et un circuit électronique de commande (44) du dispositif d'affichage d'informations (16), ce système d'éclairage (1) étant **caractérisé en ce qu'**au voisinage de la zone (4) d'injection de la lumière, le guide de lumière (2) est revêtu d'une couche de matériau non conducteur de l'électricité absorbant la lumière, le guide de lumière (2) comprenant une fente rectiligne (8) dans laquelle est guidé le connecteur électrique (10), une surface intérieure (50) de la fente rectiligne (8) étant enduite de la couche de matériau non conducteur absorbant la lumière.

## Patentansprüche

1. Beleuchtungssystem für eine Informationsanzeigevorrichtung (16), wobei das Beleuchtungssystem (1) einen Lichtleiter (2) mit zumindest einer Zone (4) aufweist, in welche das von einer Lichtquelle (14) erzeugte Licht injiziert wird, wobei der Lichtleiter (2) gleichermaßen als Leiterelement (8) für zumindest einen elektrischen Verbinder (10) verwendet wird, der eine elektrische Verbindung zwischen der Informationsanzeigevorrichtung (16) und einer elektronischen Steuerschaltung (44) der Informationsanzeigevorrichtung (16) erlaubt, wobei das Beleuchtungssystem (1) **dadurch gekennzeichnet ist, dass** in der Nachbarschaft zur Lichtinjectionzone (4) der Lichtleiter (2) mit einer Schicht aus einem elektrisch nicht leitenden lichtabsorbierenden aterial beschichtet ist, der Lichtleiter (2) einen geradlinigen Spalt (8) aufweist, in welchem der elektrische Verbinder (10) geführt ist, wobei eine Innenoberfläche (50) des geradlinigen Spalts (8) mit der Schicht nicht leitenden und lichtabsorbierenden Materials beschichtet ist.

## Claims

1. Lighting system for an information display device (16), said lighting system (1) including a light guide (2) including at least one area (4) into which the light produced by a light source (14) is injected, said light guide (2) also being used as a guide element (8) for at least one electrical connector (10) for the electrical connection between the information display device (16) and an electronic control circuit (44) of the information display device (16), said lighting system (1) being **characterized in that** in proximity to the light injection area (4), the light guide (2) is coated with a layer of electrically non-conductive light absorbing material, the light guide (2) including a rectilinear slot (8) into which the electrical connector (10) is guided, an inner surface (50) of the rectilinear slot (8) being coated with the layer of non-conductive light absorbing material.
